(19) 

Europäisches
Patentamt
European
Patent Office
Office européen
des brevets

(11) **EP 4 035 881 A1**

(12) **EUROPEAN PATENT APPLICATION**
published in accordance with Art. 153(4) EPC

(43) Date of publication:
**03.08.2022 Bulletin 2022/31**

(21) Application number: **20868166.8**

(22) Date of filing: **23.09.2020**

(51) International Patent Classification (IPC):
*B29K 21/00* (2006.01)    *B29K 23/00* (2006.01)
*B29L 9/00* (2006.01)    *C08L 23/10* (2006.01)
*C08L 101/00* (2006.01)    *B33Y 10/00* (2015.01)
*B33Y 80/00* (2015.01)    *B29C 64/118* (2017.01)
*B29C 64/209* (2017.01)    *B29C 64/314* (2017.01)
*C08K 3/013* (2018.01)    *B33Y 70/00* (2020.01)

(52) Cooperative Patent Classification (CPC):
**B29C 64/118; B29C 64/209; B29C 64/314;
B33Y 10/00; B33Y 70/00; B33Y 80/00;
C08K 3/013; C08L 23/10; C08L 101/00**

(86) International application number:
**PCT/JP2020/035806**

(87) International publication number:
**WO 2021/060278 (01.04.2021 Gazette 2021/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.09.2019   JP 2019174751
13.04.2020   JP 2020071719**

(71) Applicants:
• **Mitsui Chemicals, Inc.**
**Tokyo 105-7122 (JP)**

• **Prime Polymer Co., Ltd.**
**Tokyo 105-7122 (JP)**

(72) Inventors:
• **KONDO, Yuki**
**Chiba 299-0265 (JP)**
• **ITO, Tomoaki**
**Tokyo 105-7122 (JP)**
• **TAKEUCHI, Fumito**
**Chiba 299-0265 (JP)**
• **CHEN, Pingfan**
**Chiba 299-0265 (JP)**

(74) Representative: **J A Kemp LLP
80 Turnmill Street
London EC1M 5QU (GB)**

(54) **THREE-DIMENSIONAL MODELING MATERIAL, THREE-DIMENSIONAL MODELED OBJECT, AND PRODUCTION METHOD FOR THREE-DIMENSIONAL MODELED OBJECT**

(57)    A material for 3D printing includes a thermoplastic resin, a thermoplastic elastomer, and a filler. The filler includes talc. A content of the filler is 5% by mass or more and 70% by mass or less with respect to a total mass of the material for 3D printing.

FIG.1

EP 4 035 881 A1

**Description**

Technical Field

The present disclosure relates to a material for 3D printing, a 3D printed object, and a method of manufacturing a 3D printed object.

Background Art

In recent years, as one of efficient shaping techniques, a method of shaping a 3D printed object using a manufacturing apparatus for 3D printing has attracted attention. To shape a 3D printed object, three-dimensional coordinate data (hereinafter, referred to as "3D data") of the 3D printed object is required. Slicer software slices the 3D data to generate a plurality of pieces of two-dimensional data. The manufacturing apparatus for 3D printing sequentially stacks two-dimensional layers based on a plurality of pieces of two-dimensional data. Thus, the 3D printed object is shaped (see, for example, Patent Document 1).

Examples of a method of shaping a 3D printed object include material extrusion (MEX), vat photo polymerization, inkjet method, binder jetting, and powder bed fusion. Among these methods, material extrusion is particularly attracting attention in that a wide range of materials can be selected.

Material extrusion is a method of extruding a thermoplastic resin dissolved by heat from a nozzle and stacking the thermoplastic resin to shape a 3D printed object. Patent Document 2 discloses a material extrusion type shaping method for a 3D printed object.

Patent Document 1: Japanese Patent Application Laid-Open (JP-A) No. 2017-189885
Patent Document 2: WO 2015/129733 A

SUMMARY OF INVENTION

Technical Problem

However, the conventional material extrusion type shaping method for a 3D printed object uses a thermoplastic resin alone as a feedstock. Thus, when the molten thermoplastic resin extruded from the nozzle is solidified as a 3D printed object, the 3D printed object may be deformed due to an influence of thermal shrinkage or the like. Deformation of the 3D printed object includes warpage of the 3D printed object. As a result, a highly accurate 3D printed object could not be obtained.

The present disclosure has been made in view of the above circumstances.

An object that an embodiment of the present disclosure intends to achieve is to provide a material for 3D printing in which deformation (particularly, warpage) of a 3D printed object is suppressed.

An object that another embodiment of the present disclosure intends to achieve is to provide a 3D printed object in which deformation (particularly, warpage) is suppressed and a method of manufacturing the 3D printed object.

Solution to Problem

Specific means for achieving the object includes the following aspects.

<1> A material for 3D printing comprising a thermoplastic resin, a thermoplastic elastomer, and a filler, wherein:

the filler contains talc, and
a content of the filler is 5% by mass or more and 70% by mass or less with respect to a total mass of the material for 3D printing.

<2> The material for 3D printing according to <1>, wherein a content of the thermoplastic resin is 0.1% by mass or more and less than 100% by mass with respect to the total mass of the material for 3D printing.

<3> The material for 3D printing according to <1> or <2>, wherein a content of the thermoplastic elastomer is 10% by mass or more and less than 100% by mass with respect to the total mass of the material for 3D printing.

<4> The material for 3D printing according to any one of <1> to <3>, wherein the thermoplastic resin contains a propylene-based polymer.

<5> The material for 3D printing according to any one of <1> to <4>, whrein:

a tensile modulus X (MPa) of a hot pressed article for measurement in accordance with JIS K 7161-2: 2014 at a time of shaping into the hot pressed article for measurement satisfies the following formula (I);

an average warpage amount Y (mm) of a shaped, honeycomb object for measurement at a time of stacking and shaping into the shaped, honeycomb object for measurement satisfies the following formula (IIa);

the hot pressed article for measurement is an IBA-shaped test specimen defined in JIS K 7161-2: 2014 obtained by hot-press molding the material for 3D printing;

the shaped, honeycomb object for measurement includes:

a rectangular parallelepiped frame portion of 250 mm × 100 mm × a height of 15 mm, obtained by stacking and shaping the material for 3D printing by material extrusion such that a fill density indicating a ratio of a volume of the material for 3D printing to a unit space volume is 100%, and
a honeycomb structural portion obtained by stacking and shaping the material for 3D printing in the rectangular parallelepiped frame portion by the material extrusion such that the fill density is 30%; and

the average warpage amount Y indicates an arithmetic average value of floating quantities of four corners of the rectangular parallelepiped frame portion from a surface plate when the shaped, honeycomb object for measurement is placed on the surface plate.

$$\text{Formula (I) } 50 \leq X \leq 4000$$

$$\text{Formula (IIa) } 0 \leq Y \leq 6.0$$

<6> The material for 3D printing according to any one of <1> to <5>, wherein a content of the thermoplastic elastomer is 10% by mass or more and less than 70% by mass with respect to the total mass of the material for 3D printing,

a content of the filler is 10% by mass or more and less than 50% by mass with respect to the total mass of the material for 3D printing, and
a sum of the content of the thermoplastic elastomer and the content of the filler is 20% by mass or more and less than 90% by mass with respect to the total mass of the material for 3D printing.

<7> The material for 3D printing according to any one of <1> to <6>, wherein a tensile stress $\alpha$ (at break) [MPa] of the shaped object for measurement in a tensile test in accordance with JIS K 7161-2: 2014 at a time of stacking and shaping into the shaped object for measurement satisfies the following formula (III),

an average warpage amount Y (mm) of a shaped, honeycomb object for measurement at a time of stacking and shaping into the shaped, honeycomb object for measurement satisfies the following formula (IIb),
the shaped object for measurement is an IBA-shaped test specimen defined in JIS K 7161-2: 2014 and obtained by machining after the material for 3D printing is stacked and shaped by material extrusion such that a fill density indicating a ratio of a volume of the material for 3D printing to a unit space volume is 100% and a stacking direction of the material for 3D printing is parallel to a tensile direction of the shaped object for measurement in the tensile test,
the shaped, honeycomb object for measurement includes:

a rectangular parallelepiped frame portion of 250 mm × 100 mm × a height of 15 mm, obtained by stacking and shaping the material for 3D printing by material extrusion such that the fill density is 100%, and
a honeycomb structural portion obtained by stacking and shaping the material for 3D printing in the rectangular parallelepiped frame portion by material extrusion such that the fill density is 30%, and

the average warpage amount Y indicates an arithmetic average value of floating quantities of four corners of the rectangular parallelepiped frame portion from a surface plate when the shaped, honeycomb object for measurement is placed on the surface plate.

$$\text{Formula (III) } 6.5 \leq \alpha < 200$$

Formula (IIb) $0 \leq Y \leq 4.0$

<8> A method of manufacturing a 3D printed object, including:

a melting step of melting the material for 3D printing according to any one of <1> to <7>; and
a shaping step of extruding the melted material for 3D printing from a nozzle of a 3D printed object manufacturing apparatus to shape a 3D printed object.

<9> A 3D printed object, which is a shaped object of the material for 3D printing according to any one of <1> to <7>.

Advantageous Effects of Invention

According to an embodiment of the present disclosure, there is provided a material for 3D printing in which deformation (particularly, warpage) of a 3D printed object is suppressed.

According to another embodiment of the present disclosure, there are provided a 3D printed object in which deformation (particularly, warpage) is suppressed and a method of manufacturing the 3D printed object

BRIEF DESCRIPTION OF DRAWINGS

Fig. 1 is a perspective photograph showing a shaped, honeycomb object for measurement.

Fig. 2 is a side view of the shaped, honeycomb object for measurement for explaining an average warpage amount Y.

DESCRIPTION OF EMBODIMENT

Hereinafter, an embodiment of the present disclosure will be described. These descriptions and examples illustrate the embodiment and do not limit the scope of the embodiment.

In the present specification, the numerical range expressed using "... to..." means a range including values presented before and after "to" as a lower limit value and an upper limit value.

In numerical ranges described in stages in the present disclosure, the upper limit value or the lower limit value of a numerical range may be replaced with the upper limit value or the lower limit value of a numerical range of a different stage. In a numerical range described in the present disclosure, the upper limit value or the lower limit value of the numerical range may be replaced with a value shown in Examples.

In the present disclosure, each component may contain a plurality of corresponding substances. In the present disclosure, upon referring to an amount of each component in a composition, in the case where there are a plurality of substances corresponding to each component in the composition, the amount means a total amount of the plurality of substances present in the composition unless otherwise specified.

In the present disclosure, a combination of two or more preferred aspects is a more preferred aspect.

<<Material for 3D printing >>

A material for 3D printing of the present disclosure is a feedstock supplied to a shaping process of a 3D printed object.

The material for 3D printing of the present disclosure includes a thermoplastic resin, a thermoplastic elastomer, and a filler. The filler includes talc. A content of the filler is 5% by mass or more and 70% by mass or less with respect to a total mass of the material for 3D printing.

Thus, deformation such as warpage of the 3D printed object obtained by shaping the material for 3D printing of the present disclosure is suppressed.

(Filler)

The material for 3D printing of the present disclosure includes a filler.

[Talc]

The filler includes talc. Since the talc does not change in volume at a shaping temperature, and a thermal expansion coefficient of the talc is lower than the thermal expansion coefficient of each of the thermoplastic resin and the thermoplastic elastomer, deformation (particularly, warpage) of the 3D printed object is suppressed. When the 3D printed object is shaped by material extrusion, the shaping temperature indicates a nozzle temperature of a 3D printed object manufacturing apparatus. The fact that the talc does not change in volume at the shaping temperature means that the talc does not melt, the talc is not dissolved, and the talc does not undergo a phase transition at the shaping temperature.

Talc is called talcum. Talc is hydrated magnesium silicate. The hydrated magnesium silicate is a kind of layered clay mineral, and is formed by combining magnesium (Mg) and silicon (Si) with oxygen and a hydroxyl group.

A chemical structural formula of talc is generally represented by $[Mg_3Si_4O_{10}(OH)_2]$ or $[3MgO \cdot 4SiO_2 \cdot H_2O]$.

The shape of the talc is not particularly limited, and is preferably, for example, flaky shape, elliptical, or the like.

An upper limit of a volume average particle diameter of talc is preferably 30 μm or less, and more preferably 10 μm or less. A lower limit of the volume average particle diameter of talc is preferably 1 μm or more, and more preferably 5 μm or more.

The volume average particle diameter of talc refers to a particle diameter value at which an integrated volume is 50% of a total volume when the volume of each particle based on the particle diameter of each particle measured in a state where talc is dispersed in water is integrated from a small particle diameter side using a particle size distribution measurement device such as a laser diffraction/scattering type particle size distribution measurement device.

A content of talc is preferably 50% by mass or more, more preferably 60% by mass or more, and still more preferably 70% by mass or more with respect to 100% by mass of the total amount in the filler.

In addition to talc, the filler may contain an inorganic filler, an organic filler, a glitter powder, a dye powder, a composite filler thereof, and the like. The filler may be used singly or in combination of two or more kinds thereof.

The filler may include an inorganic filler.

Examples of the inorganic filler include an inorganic powder different from talc (hereinafter, simply referred to as "inorganic powder"), a glitter inorganic powder, a composite inorganic powder, and an inorganic fiber.

Examples of the inorganic powder include titanium oxide, black titanium oxide, iron blue pigment, ultramarine blue pigment, colcothar, yellow iron oxide, black iron oxide, zinc oxide, aluminum oxide, silica, magnesium oxide, zirconium oxide, magnesium carbonate, calcium carbonate, chromium oxide, chromium hydroxide, carbon black, aluminum silicate, magnesium silicate, aluminum magnesium silicate, mica, synthetic mica, synthetic iron mica, sericite, moth Heidi (magnesium sulfate whisker), kaolin, silicon carbide, barium sulfate, bentonite, smectite, and boron nitride.

Examples of the glitter inorganic powder include bismuth oxychloride, titanium oxide-coated mica, iron oxide-coated mica, iron oxide-coated mica titanium, iron oxide-titanium oxide sintered body, and aluminum powder.

Examples of the composite inorganic powder include fine particle titanium oxide-coated mica titanium, fine particle zinc oxide-coated mica titanium, barium sulfate-coated mica titanium, titanium oxide-containing silica, and zinc oxide-containing silica.

Examples of the inorganic fiber include a glass fiber.

Among the above, the inorganic filler preferably contains at least one of the inorganic powder and the inorganic fiber from the viewpoint of further suppressing deformation (particularly, warpage) of the 3D printed object.

The inorganic filler may contain both talc and a glass fiber from the viewpoint of increasing a tensile modulus of the 3D printed object and smoothing the appearance of the 3D printed object. In this case, a content ratio (Talc: Fiber) of talc (Talc) to glass fiber (Fiber) is preferably 90: 10 to 40: 60, and more preferably 85: 15 to 45: 55 in terms of a mass ratio. In particular, when the content ratio (Talc: Fiber) is 85: 15 or more, fluffing of the surface of the 3D printed object tends to be further suppressed. The occurrence of fluffing of the surface of the 3D printed object is not limited to the glass fiber, and is a specific problem of a 3D printing material including a fiber based material such as a carbon fiber.

The filler may include an organic filler.

Examples of the organic filler include resin particles and pulp.

Examples of the resin particles include carbon fiber, polyethylene, polypropylene, polystyrene, tetrafluoroethylene, silicone powder, and polyphenylene ether.

Examples of the pulp include cellulose and cellulose derivatives.

The shape of the filler may be any of a spherical shape, a plate shape, and a needle shape.

The filler may be porous or non-porous.

From the viewpoint of further suppressing deformation (particularly warpage) of the 3D printed object, the content of the filler is 5% by mass or more and 70% by mass or less, preferably more than 5% by mass and 55% by mass or less, and more preferably more than 5% by mass and 45% by mass or less, with respect to the total mass of the material for 3D printing.

When the content of the filler is 5% by mass or more and 70% by mass or less, deformation (particularly, warpage) of the 3D printed object is suppressed.

(Thermoplastic resin)

The material for 3D printing of the present disclosure includes a thermoplastic resin.

In the present disclosure, the tensile modulus of the thermoplastic resin at 25°C is $6.0 \times 10^8$ Pa or more.

The thermoplastic resin is not particularly limited, and a known thermoplastic resin can be applied. The thermoplastic resin may be used singly or in combination of two or more kinds thereof.

Examples of the thermoplastic resin include general-purpose plastics, engineering plastics, and super engineering plastics.

Examples of the general-purpose plastic include high density polyethylene (HDPE), low density polyethylene (LDPE), a propylene-based polymer (propylene homopolymer (PP) or the like), polyvinyl chloride (PVC), polyvinylidene chloride, polystyrene (PS), polyvinyl acetate (PVAc), polytetrafluoroethylene (PTFE), an acrylonitrile butadiene styrene resin (ABS resin), a styrene acrylonitrile copolymer (AS resin), and an acrylic resin (PMMA or the like).

Examples of the engineering plastics include polyamide (PA), polyacetal (POM), polycarbonate (PC), modified polyphenylene ether (m-PPE, modified PPE, PPO), polybutylene terephthalate (PBT), polyethylene terephthalate (PET), syndiotactic polystyrene (SPS), and cyclic polyolefin (COP).

Examples of the super engineering plastics include polyphenylene sulfide (PPS), polytetrafluoroethylene (PTFE), polysulfone (PSF), polyether sulfone (PES), amorphous polyarylate (PAR), polyether ether ketone (PEEK), thermoplastic polyimide (PI), and polyamideimide (PAI).

Among them, the thermoplastic resin preferably contains one or more selected from the group consisting of high density polyethylene (HDPE), a propylene-based polymer, polyamide (PA), polybutylene terephthalate (PBT), syndiotactic polystyrene (SPS), polyphenylene sulfide (PPS), and polyacetal (POM), and more preferably contains a propylene-based polymer.

The thermoplastic resin may be a crystalline thermoplastic resin or an amorphous thermoplastic resin. For example, from the viewpoint of affinity with the thermoplastic elastomer and from the viewpoint of suitably dispersing the filler in the thermoplastic resin, the thermoplastic resin preferably contains a crystalline thermoplastic resin, more preferably contains at least one selected from the group consisting of high density polyethylene (HDPE), a propylene-based polymer, polyamide (PA), polybutylene terephthalate (PBT), syndiotactic polystyrene (SPS), polyphenylene sulfide (PPS), and polyacetal (POM), and still more preferably contains a crystalline propylene-based polymer. The term "crystalline" of the thermoplastic resin means that the thermoplastic resin has an endothermic peak in differential scanning calorimetry. On the other hand, the term "amorphous" of the thermoplastic resin means that a clear endothermic peak is not observed in differential scanning calorimetry.

The propylene-based polymer is a polymer having at least propylene as a constituent unit.

The propylene-based polymer may be a homopolymer of propylene or a copolymer of propylene and another monomer. When the propylene-based polymer is a copolymer, examples of the propylene-based polymer include a copolymer of propylene and an $\alpha$-olefin having 2 to 20 carbon atoms (with the exception of propylene). Examples of the copolymer of propylene and an $\alpha$-olefin having 2 to 20 carbon atoms include a propylene/ethylene copolymer, a propylene/1-butene copolymer, a propylene/ethylene/1-butene copolymer, a propylene/4-methyl-1-pentene copolymer, and mixtures thereof.

When the propylene-based polymer is a copolymer, the propylene-based polymer may be any of a random copolymer, an alternating copolymer, a block copolymer, and a graft copolymer.

When the propylene-based polymer is a copolymer, a ratio of a propylene-derived structural unit in the propylene-based polymer may be appropriately designed according to desired properties of the 3D printed object. For example, the ratio of the propylene-derived structural unit in the propylene-based polymer is preferably 50 mol% or more, more preferably 70 mol% to 99.5 mol%, and still more preferably 80 mol% to 98 mol%, with respect to 100 mol% of all the structural units in the propylene-based polymer.

Stereoregularity of the propylene-based polymer may be any of isotactic, syndiotactic, and mixtures thereof.

A content of the propylene-based polymer is preferably 95.0% by mass or more, more preferably 98.0% by mass or more, and still more preferably 99.9% by mass or more, with respect to 100% by mass of a total amount of the thermoplastic resin.

A crystallization temperature (Tc) of the thermoplastic resin is preferably 90°C to 140°C, and more preferably 110°C to 130°C.

The crystallization temperature of the thermoplastic resin is measured by a differential scanning calorimeter (DSC) under the condition of a temperature falling rate of 10°C/min.

The degree of crystallinity of the thermoplastic resin is preferably 2% to 80%, and more preferably 5% to 75%.

The degree of crystallinity of the thermoplastic resin is calculated from heat of fusion attributable to fusion of a main component in a heat flow curve obtained using a differential scanning calorimeter (DSC). The heat flow curve is obtained by holding the thermoplastic resin at -40°C for 5 minutes under a nitrogen atmosphere and then raising the temperature at 10°C/min. Specifically, using a differential scanning calorimeter (manufactured by PerkinElmer Co., Ltd., DSC-7), 5 mg of a sample is held at -40°C for 5 minutes under a nitrogen atmosphere, and then the temperature is raised at 10°C/min to obtain the heat flow curve. The heat of fusion is calculated from the heat of fusion attributable to fusion of the main component in the obtained heat flow curve using the following formula.

$$\text{Degree of crystallinity} = (\Delta H / \Delta H0) \times 100\ (\%)$$

In the formula, $\Delta H$ is a heat quantity of fusion (J/g) obtained from a heat of fusion curve attributable to fusion of the main component of the thermoplastic resin, and $\Delta H0$ is the heat quantity of fusion (J/g) of the perfect crystal of the main component. For example, when the main component is ethylene, $\Delta H0$ is 293 J/g, and when the main component is propylene, $\Delta H0$ is 210 J/g.

The melting point of the thermoplastic resin is preferably 90°C or higher, more preferably 110°C or higher and 200°C or lower, and still more preferably 110°C or higher and 180°C or lower.

The melting point can be measured in the same manner as a method for measuring the melting point of a thermoplastic elastomer described later.

From the viewpoint of further suppressing deformation (particularly, warpage) of the 3D printed object, a content of the thermoplastic resin can be in a range of 0.1% by mass or more and less than 100% by mass, more preferably in a range of 10% by mass to 70% by mass, and still more preferably in a range of 20% by mass to 60% by mass, with respect to the total mass of the material for 3D printing.

(Thermoplastic elastomer)

The material for 3D printing of the present disclosure includes a thermoplastic elastomer.

When the material for 3D printing contains the thermoplastic elastomer, deformation of the 3D printed object is effectively suppressed.

The thermoplastic elastomer has rubber-like elasticity. The rubber-like elasticity indicates a property that the shape of the resin is deformed when a load is applied to the resin, and the shape of the resin tends to return to the original shape when the load applied to the resin is removed. Specifically, the thermoplastic elastomer refers to a thermoplastic resin having a tensile modulus at 25°C of less than $6.0 \times 10^8$ Pa. In this respect, the thermoplastic elastomer is distinguished from the thermoplastic resin.

The thermoplastic elastomer is preferably a copolymer containing a constituent unit derived from an $\alpha$-olefin and a constituent unit derived from another olefin different from the $\alpha$-olefin.

As the $\alpha$-olefin, usually, one $\alpha$-olefin having 2 to 20 carbon atoms may be contained alone, or two or more $\alpha$-olefins may be contained in combination. In particular, the $\alpha$-olefin is preferably an $\alpha$-olefin having 3 or more carbon atoms, and particularly preferably an $\alpha$-olefin having 3 to 8 carbon atoms.

Examples of the $\alpha$-olefin include 1-butene, 1-pentene, 1-hexene, 3-methyl-1-butene, 3,3-dimethyl-1-butene, 4-methyl-1-pentene, and 1-octene. One kind or two or more kinds of $\alpha$-olefins are used.

In particular, from the viewpoint of easy availability, 1-butene, 1-pentene, 1-hexene, and 4-methyl-1-pentene are preferable as the $\alpha$-olefin.

As another olefin different from the $\alpha$-olefin, an olefin having 2 to 4 carbon atoms is preferable, and examples thereof include ethylene, propylene, and butene. In particular, another olefin different from the $\alpha$-olefin is more preferably an olefin having 2 to 3 carbon atoms.

Examples of the copolymer that is a thermoplastic elastomer include an ethylene/$\alpha$-olefin copolymer, a propylene/$\alpha$-olefin copolymer, and a butene/$\alpha$-olefin copolymer.

Examples of the thermoplastic elastomer include an ethylene-propylene copolymer (EPR), an ethylene-1-butene copolymer (EBR), an ethylene-1-pentene copolymer, an ethylene-1-octene copolymer (EOR), a propylene-1-butene copolymer (PBR), a propylene-1-pentene copolymer, and a propylene-1-octene copolymer (POR).

In particular, as the thermoplastic elastomer, a copolymer containing a constituent unit derived from an $\alpha$-olefin having 2 to 8 carbon atoms and a constituent unit derived from an olefin having 2 to 3 carbon atoms is preferable, and a propylene-based elastomer is preferable from the viewpoint of having excellent compatibility with a thermoplastic resin (in particular, propylene-based polymer) and further suppressing deformation of a 3D printed object.

In addition, the $\alpha$-olefin may form a random copolymer or a block copolymer.

The melting point of the thermoplastic elastomer is preferably 30°C to 120°C.

When the melting point is 30°C to 120°C, the thermoplastic elastomer acts as an adhesive between shaping layers of a 3D printed object shaped by material extrusion. Thus, bonding strength between the shaping layers of the 3D printed object shaped by material extrusion is improved. In the material extrusion, the shaping layer includes the material for 3D printing extruded from a nozzle.

The melting point is a value determined as a temperature Tm at a fusion peak position appearing in an endothermic curve by differential scanning calorimetry (DSC).

The melting point is determined from the endothermic curve determined when a specimen is loaded into an aluminum pan and the temperature is increased to 230°C at 100°C/min, maintained at 230°C for 5 minutes, then lowered to -70°C at -10°C/min, and then increased at 10°C/min.

The lower limit of a melt flow rate (MFR; 230°C, 2.16 kg load) of the thermoplastic elastomer is preferably 0.5 g/10 min or more, more preferably 1 g/10 min or more, still more preferably 2 g/10 min or more, and particularly preferably 5 g/10 min.

The upper limit of the melt flow rate (MFR; 230°C, 2.16 kg load) of the thermoplastic elastomer is preferably 70 g/10 min or less, more preferably 35 g/10 min or less, and still more preferably 30 g/10 min.

When the upper limit and the lower limit of the MFR of the thermoplastic elastomer are within this range, deformation of the 3D printed object can be more effectively suppressed.

The melt flow rate (MFR) is a value measured in accordance with ASTM D1238-65T under conditions of 230°C and a load of 2.16 kg.

The thermoplastic elastomer is preferably a thermoplastic elastomer having a Shore A hardness of 50 to 99 or a thermoplastic elastomer having a Shore D hardness of 30 to 60.

When the hardness of the thermoplastic elastomer is 50 or more in Shore A hardness or 30 or more in Shore D hardness, the thermoplastic elastomer is hardly deformed. In other words, the shape of the thermoplastic elastomer is easily maintained. Thus, when the 3D printed object is shaped using the 3D printed object manufacturing apparatus described later, the thermoplastic elastomer easily enters a screw of a cylinder. As a result, discharge efficiency of the 3D printing material in a molten state is improved. Thus, a 3D printed object having a smooth surface and excellent appearance can be easily obtained.

For the same reason as described above, the lower limit of the hardness is preferably 55 or more in Shore A hardness or 40 or more in Shore D hardness, and more preferably 60 or more in Shore A hardness or 50 or more in Shore D hardness. The upper limit of the hardness is not particularly limited, and is preferably 96 or less in Shore A hardness or 60 or less in Shore D hardness. Among the above, the lower limit of the hardness is more preferably one having a Shore D hardness of 40 or more, and still more preferably one having a Shore D hardness of 50 or more for the same reason as described above

The Shore A hardness and the Shore D hardness are values measured in accordance with the method described in ASTM D2240.

Specific examples of the thermoplastic elastomer include TAFMER (registered trademark) series (e.g., TAFMER DF605, TAFMER DF610, TAFMER DF640, TAFMER DF710, TAFMER DF740, TAFMER DF7350, TAFMER DF810, TAFMER DF840, TAFMER DF8200, TAFMER DF940, TAFMER DF9200, TAFMER DF110, TAFMER H-0530S, TAFMER H-1030S, TAFMER H-5030S, TAFMER XM-7070, TAFMER XM-7080, TAFMER XM-7090, TAFMER BL2491M, TAFMER BL2481M, TAFMER BL3110M, TAFMER BL3450M, TAFMER MA8510, TAFMER MH7010, TAFMER MH7020, TAFMER MH5020, TAFMER PN-2070, TAFMER PN-3560) manufactured by Mitsui Chemicals, Inc.

Among the above thermoplastic elastomers, TAFMER XM series, which is a propylene-based elastomer, is preferable from the viewpoint of excellent compatibility with a thermoplastic resin (in particular, propylene-based polymer) and further suppressing deformation of the 3D printed object.

The TAFMER XM series is excellent in compatibility with a thermoplastic resin (in particular, propylene-based polymer), and can maintain a tensile stress $\alpha$ (at break) required for the 3D printed object. Thus, the bonding strength between the shaping layers of the 3D printed object shaped by material extrusion is improved.

The thermoplastic elastomer is preferably a propylene-based elastomer. The propylene-based elastomer is a thermoplastic elastomer having at least propylene as a constituent unit.

The thermoplastic elastomer is a propylene-based elastomer, and preferably has a melting point of 80°C to 120°C, a Shore D hardness of 40 to 60, and an MFR of 2 g/10 min to 20 g/10 min. As a result, the 3D printed object has smaller stress distortion and is less likely to warp.

Examples of the propylene-based elastomer having a melting point of 80°C to 120°C, a Shore D hardness of 40 to 60, and an MFR of 2 g/10 min to 20 g/10 min include TAFMER XM-7090.

The content of the thermoplastic elastomer is preferably in a range of more than 0.1% by mass and less than 100% by mass, more preferably in a range of 10% by mass or more and less than 100% by mass, still more preferably in a range of 10% by mass to 70% by mass, and particularly preferably in a range of 20% by mass to 50% by mass, with respect to the total mass of the material for 3D printing.

The material for 3D printing preferably satisfies the following (a1), (b1), and (c1).

(a1) The content of the thermoplastic elastomer is 10% by mass or more and less than 70% by mass with respect to the total mass of the material for 3D printing.

(b1) The content of the filler is 10% by mass or more and less than 50% by mass with respect to the total mass of the material for 3D printing.
(c1) A sum of the content of the thermoplastic elastomer and the content of the filler is 20% by mass or more and less than 90% by mass with respect to the total mass of the material for 3D printing.

The material for 3D printing more preferably satisfies any one of the following (a2), (b2), and (c2).
The 3D printed object using the material for 3D printing satisfying any one of the following (a2), (b2), and (c2) has smaller stress strain, is less likely to be broken, and is less likely to warp.

(a2) The content of the thermoplastic elastomer is 15% by mass or more and 25% by mass or less, and the content of the filler is 35% by mass or more and 45% by mass or less with respect to the total mass of the material for 3D printing.
(b2) The content of the thermoplastic elastomer is 25% by mass or more and 35% by mass or less, and the content of the filler is 15% by mass or more and 45% by mass or less with respect to the total mass of the material for 3D printing.
(c2) The content of the thermoplastic elastomer is 35% by mass or more and 45% by mass or less, and the content of the filler is 15% by mass or more and 35% by mass or less with respect to the total mass of the material for 3D printing.

The material for 3D printing more preferably satisfies the following (a3) or (b3) among (a2), (b2), and (c2) above.
In the 3D printed object using the material for 3D printing satisfying the following (a3) or (b3), the stress distortion is smaller, and 3D data can be more faithfully embodied.

(a3) The content of the thermoplastic elastomer is 25% by mass or more and 35% by mass or less, and the content of the filler is 25% by mass or more and 35% by mass or less with respect to the total mass of the material for 3D printing.
(b3) The content of the thermoplastic elastomer is 35% by mass or more and 45% by mass or less, and the content of the filler is 15% by mass or more and 35% by mass or less with respect to the total mass of the material for 3D printing.

(Properties of material for 3D printing)

The melting point of the material for 3D printing is preferably 90°C or higher, more preferably 110°C or higher and 200°C or lower, and still more preferably 110°C or higher and 180°C or lower from the viewpoint of further suppressing deformation (particularly, warpage) of the 3D printed object.
A method of setting the melting point of the material for 3D printing within the above range is not particularly limited, and examples the method include a method in which the type of filler, thermoplastic resin, or thermoplastic elastomer is the type described later.
In the material for 3D printing of the present disclosure, for example, it is preferable that the tensile modulus X (MPa) satisfies the following formula (I), and when a 3D printed object having a rectangular parallelepiped shape is formed which has a size of 250 mm × 100 mm × a height of 15 mm and a fill density of 30% in a full honeycomb, the average warpage amount Y (mm) satisfies the formula (IIa), and it is more preferable that the following formula (I) is satisfied and the average warpage amount Y (mm) satisfies the formula (IIb).

$$\text{Formula (I) } 50 \leq X \leq 4000$$

$$\text{Formula (IIa) } 0 \leq Y \leq 6.0$$

$$\text{Formula (IIb) } 0 \leq Y \leq 4.0$$

In the formula (I), X preferably satisfies $300 \leq X \leq 4000$. In an aspect according to the present disclosure, X can satisfy $1000 \leq X \leq 2500$.
[Tensile modulus X of hot pressed article for measurement]
The lower limit of the tensile modulus X of the hot pressed article for measurement (hereinafter, simply referred to as "tensile modulus X of the hot pressed article for measurement") when the material for 3D printing is molded into the hot pressed article for measurement is preferably 50 MPa or more, more preferably 300 MPa or more, and still more preferably 1000 MPa or more.
The upper limit of the tensile modulus X of the hot pressed article for measurement is preferably 4000 MPa or less, and more preferably 2500 MPa or less.
In the present disclosure, the tensile modulus X of the hot pressed article for measurement is measured in accordance with JIS K7161-2: 2014. The test speed is 0.5 mm/min.

The hot pressed article for measurement is an IBA-shaped test specimen defined in JIS K 7161-2: 2014 obtained by hot-press molding the material for 3D printing. The total length of the hot pressed article for measurement is 75 mm. The thickness of the hot pressed article for measurement is 2 mm.

The heating temperature in the hot-press molding is 200°C. The press pressure in the hot-press molding is 50 MPa. The press time for hot-press molding is 3 minutes.

The hot pressed article for measurement may be a machined product obtained by machining a hot press molded product obtained by hot-press molding the material for 3D printing.

[Thermal expansion coefficient of hot pressed article for measurement]

A thermal expansion coefficient of the hot pressed article for measurement obtained when the material for 3D printing is molded into the hot pressed article for measurement (the thermal expansion coefficient is hereinafter simply referred to as the "thermal expansion coefficient of the hot pressed article for measurement") is preferably $1 \times 10^{-6}$ (/°C) to $1 \times 10^{-3}$ (/°C), and more preferably $1 \times 10^{-6}$ (/°C) to $5 \times 10^{-4}$ (/°C) from the viewpoint of further suppressing deformation (particularly, warpage) of a shaped, honeycomb object 10 for measurement.

The thermal expansion coefficient of the hot pressed article for measurement is measured in accordance with JIS K 7197: 2012.

[Crystallization temperature of hot pressed article for measurement]

The crystallization temperature (Tc) of the hot pressed article for measurement obtained when the material for 3D printing is molded into the hot pressed article for measurement (the crystallization temperature is hereinafter simply referred to as the "crystallization temperature (Tc) of the hot pressed article for measurement") is preferably 80°C to 140°C, and more preferably 100°C to 130°C.

A method of measuring the crystallization temperature (Tc) of the hot pressed article for measurement is the same as the method of measuring the crystallization temperature of the thermoplastic resin.

[Melting point of hot pressed article for measurement]

The melting point of the hot pressed article for measurement obtained when the material for 3D printing is molded into the hot pressed article for measurement (the melting point is hereinafter referred to as the "melting point of the hot pressed article for measurement") is preferably 90°C or higher, more preferably 110°C or higher and 200°C or lower, and still more preferably 110°C or higher and 180°C or lower from the viewpoint of further suppressing deformation (particularly, warpage) when the material for 3D printing is formed into the 3D printed object.

A method of measuring the melting point of the hot pressed article for measurement is the same as the method of measuring the melting point of the thermoplastic elastomer.

[Average warpage amount Y of shaped, honeycomb object for measurement]

The average warpage amount Y of the shaped, honeycomb object 10 for measurement obtained when the material for 3D printing is stacked and shaped into the shaped, honeycomb object 10 for measurement (the average warpage amount is hereinafter simply referred to as the "average warpage amount Y of the shaped, honeycomb object 10 for measurement") is preferably 6.0 mm or less, more preferably 4.0 mm or less, the lower the average warpage amount Y is, the more preferably the average warpage amount Y is, and the average warpage amount Y of the shaped, honeycomb object 10 for measurement is particularly preferably 0 mm.

The above description that "when a 3D printed object having a rectangular parallelepiped shape is formed which has a size of 250 mm × 100 mm × a height of 15 mm and a fill density of 30% in a full honeycomb, the average warpage amount Y (mm) satisfies the formula (IIa)" indicates that the average warpage amount Y (mm) of the shaped, honeycomb object 10 for measurement satisfies the formula (IIa).

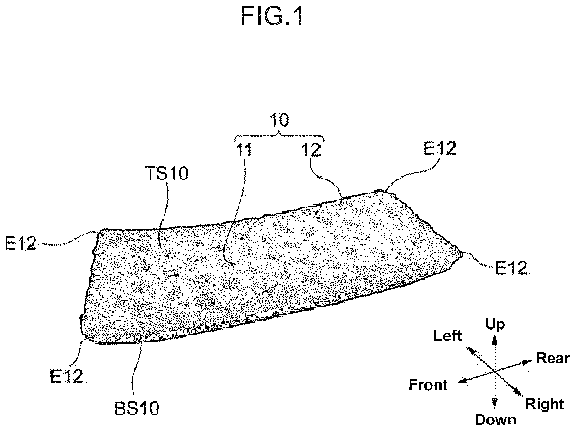

Next, the shaped, honeycomb object 10 for measurement will be described with reference to Fig. 1. Fig. 1 is a perspective photograph of the shaped, honeycomb object 10 for measurement.

As shown in Fig. 1, the shaped, honeycomb object 10 for measurement includes a honeycomb structural portion 11 and a rectangular parallelepiped frame portion 12. The honeycomb structural portion 11 is located in the rectangular parallelepiped frame portion 12. The honeycomb structural portion 11 and the rectangular parallelepiped frame portion 12 are integrated. The shaped, honeycomb object 10 for measurement is a substantially rectangular parallelepiped object.

The rectangular parallelepiped frame portion 12 surrounds a circumferential edge portion of the honeycomb structural portion 11 in a direction orthogonal to a vertical direction (see Fig. 1). The rectangular parallelepiped frame portion 12 is obtained by stacking and shaping the material for 3D printing by material extrusion so that the fill density is 100%. The rectangular parallelepiped frame portion 12 has a size of 250 mm × 100 mm × a height of 15 mm. Specifically, in Fig. 1, the length of the rectangular parallelepiped frame portion 12 in a front-rear direction is 250 mm. The length of the rectangular parallelepiped frame portion 12 in a left-right direction is 100 mm. The length in the vertical direction is 15 mm. The rectangular parallelepiped frame portion 12 includes four plate portions. The thickness of each of the four plate portions is 5 mm.

The structure of the honeycomb structural portion 11 is a honeycomb structure. The honeycomb structural portion 11 is obtained by stacking and shaping the material for 3D printing by material extrusion in the rectangular parallelepiped frame portion 12 so that the fill density is 30%.

The fill density indicates a ratio of a volume of the material for 3D printing to a unit space volume.

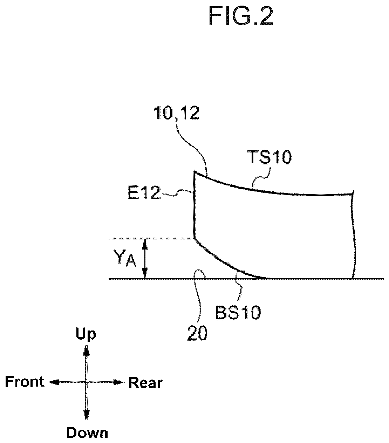

Next, the average warpage amount Y of the shaped, honeycomb object 10 for measurement will be described with reference to Fig. 2. Fig. 2 is a side view of the shaped, honeycomb object 10 for measurement for explaining the average warpage amount Y.

The average warpage amount Y of the shaped, honeycomb object 10 for measurement indicates an arithmetic average value of floating quantities $Y_A$ of four corners of the rectangular parallelepiped frame portion 12 from a surface plate 20 when the shaped, honeycomb object 10 for measurement is placed on the surface plate 20.

The floating quantity $Y_A$ of a corner portion E12 of the rectangular parallelepiped frame portion 12 is measured as follows. As shown in Fig. 2, the shaped, honeycomb object 10 for measurement is placed on the surface of the surface plate 20 such that a first surface TS10 of the shaped, honeycomb object 10 for measurement faces upward. Next, the maximum height of the lower surface BS10 of the corner portion E12 of the shaped, honeycomb object 10 for measurement from the surface of the surface plate 20 is measured. A height gauge can be used to measure the maximum height. A measurement value to be obtained indicates the floating quantity $Y_A$ of the corner portion E12 of the rectangular parallelepiped frame portion 12.

The average warpage amount Y of the shaped, honeycomb object 10 for measurement is obtained by adding the floating quantity $Y_A$ of each of the four corners of the shaped, honeycomb object 10 for measurement measured in this manner and dividing an additional value to be obtained by 4.

When the 3D printed object is shaped by material extrusion, from the viewpoint of enhancing the bonding strength between the shaping layers of the 3D printed object, the shaping layer (hereinafter, referred to as the "first shaping layer") formed from the material for 3D printing in the molten state extruded from the nozzle and the shaping layer (hereinafter, referred to as the "second shaping layer") on which the first shaping layer is deposited are preferably melt-bonded. In addition it is preferable that the second shaping layer is melted by heat of the first shaping layer, or the crystallization of the second shaping layer does not proceed until the first shaping layer is completely deposited on the second shaping layer. Thus, the crystallization temperature (Tc) of the material for 3D printing is preferably 80°C to 140°C, and more preferably 100°C to 130°C.

The crystallization temperature of the material for 3D printing can be measured in the same manner as the method for measuring the thermoplastic resin.

[Tensile stress $\alpha$ (at break) of shaped object for measurement]

The lower limit of the tensile stress $\alpha$ (at break) of the shaped object for measurement obtained when the material for 3D printing is stacked and shaped into the shaped object for measurement (hereinafter, the tensile stress (at break) is simply referred to as the "tensile stress $\alpha$ (at break) of the shaped object for measurement") is preferably 4.0 MPa or more, more preferably 5 MPa or more, still more preferably 6.5 MPa or more, and even more preferably 8.0 MPa or more.

The upper limit of the tensile stress $\alpha$ (at break) of the shaped object for measurement is preferably 200.0 MPa.

The tensile stress $\alpha$ (at break) of the 3D printed object is measured in accordance with JIS K7161-2: 2014 (test speed: 50 mm/min) by shaping a quadrangular prism shaped object having a thickness of 2 mm, and punching a test specimen (JIS K7161-2 1BA: 2014) from a wall portion thereof so that a tensile direction is a stacking direction. Thus, the tensile stress $\alpha$ (at break) of the 3D printed object in the stacking direction of the 3D printed object is confirmed. The tensile stress $\alpha$ (at break) of the 3D printed object in the stacking direction of the 3D printed object is generally the smallest among the tensile stresses (at break) of the 3D printed object. When a yield of the 3D printed object occurs before breaking of the 3D printed object, the smaller one of the tensile stress (at break) and yield stress is adopted as the tensile stress $\alpha$ (at break).

In other words, the tensile stress $\alpha$ (at break) of the shaped object for measurement is a measurement value of a tensile test in accordance with JIS K7161-2: 2014.

The shaped object for measurement is an IBA-shaped test specimen defined in JIS K 7161-2: 2014 obtained by stacking and shaping the material for 3D printing by material extrusion and machining. The total length of the shaped object for measurement is 75 mm. The thickness of the shaped object for measurement is 2 mm.

The shaped object for measurement before being machined (hereinafter, referred to as the "shaped object for measurement before machining") is, for example, a quadrangular prism-shaped shaped object having a thickness of 2 mm. The shaped object for measurement before machining is obtained by stacking and shaping the material for 3D printing by material extrusion so that the fill density is 100% and the stacking direction of the material for 3D printing is parallel to the tensile direction of the shaped object for measurement in the tensile test.

[Tensile modulus Z of shaped object for measurement]

The lower limit of a tensile modulus Z of the shaped object for measurement obtained when the material for 3D printing is stacked and shaped into the shaped object for measurement described above (hereinafter, the tensile modulus is simply referred to as the "tensile modulus Z of the shaped object for measurement") is preferably 200 MPa or more, more preferably 800 MPa or more, and still more preferably 1000 MPa or more.
The upper limit of the tensile modulus X of the material for 3D printing is preferably 4000 MPa or less, more preferably 2500 MPa or less, and still more preferably 2000 MPa or less.
In the present disclosure, the tensile modulus Z of the shaped object for measurement is measured in accordance with JIS K7161-2: 2014. The test speed is 0.5 mm/min.
In the shaped object for measurement, the stacking direction of the material for 3D printing is parallel to the tensile direction of the shaped object for measurement in the tensile test in accordance with JIS K 7161-2: 2014.
In the material for 3D printing, it is preferable that the tensile stress $\alpha$ (at break) (MPa) of the shaped object for measurement satisfies the following formula (III), and the average warpage amount Y (mm) of the shaped, honeycomb object 10 for measurement satisfies the following formula (IIb).

$$\text{Formula (III) } 6.5 \leq \alpha < 200$$

$$\text{Formula (IIb) } 0 \leq Y \leq 4.0$$

(Other components)

The material for 3D printing in the present disclosure may contain other components in addition to the thermoplastic elastomer and the thermoplastic resin described above.
Examples of other components include an ultraviolet absorber, a stabilizer, an antioxidant, a plasticizer, a coloring agent, a color adjusting agent, a fire retardant, an antistatic agent, a fluorescent brightener, a flatting agent, and an impact strength modifier.

(Form of material for 3D printing)

The material for 3D printing may be a molded article.
A method of molding the molded article is not particularly limited, and the molded article may be molded by a known molding method such as extrusion molding.
The form of the molded article may be a pellet or a filament.
The pellet refers to a small amount of solid that has been pre-shaped.
The filament refers to an elongated object having an elongated string shape and a uniform cross section. The filament is generally used in a form of being wound around a reel.
The material for 3D printing may be in the form of either a pellet or a filament, or may be a mixture in which materials in the form of both a pellet and a filament are mixed. The form of the material for 3D printing is preferably the pellet from the viewpoint of shaping a 3D printed object having a relatively large size.
When the material for 3D printing is molded into a pellet, the molding method is not limited. Examples of the method of molding a pellet include a method in which the material for 3D printing is kneaded and extruded by a melt extruder (e.g., a twin-screw extruder), and a rod-shaped strand extruded is cut by a pelletizer. The material for 3D printing to be charged into the melt extruder may be a dry blend. The dry blend is prepared by mixing a part or all of the material for 3D printing in advance with a Henschel mixer or the like.

<Method of manufacturing 3D printed object>

A method of manufacturing a 3D printed object of the present disclosure, including a melting step of melting the material for 3D printing of the present disclosure described above, and a shaping step of extruding the melted material for 3D printing from a nozzle of a 3D printed object manufacturing apparatus to shape a 3D printed object. The melting step and the shaping step are executed in this order.

(Melting step)

In the melting step in the present disclosure, the above-described material for 3D printing of the present disclosure is melted.

Heating means for melting the material for 3D printing is not particularly limited, and known heating means can be applied.

In the melting step, for example, a 3D printed object manufacturing apparatus including heating means such as an electric heater is preferably used.

A temperature at which the material for 3D printing is melted is not particularly limited, and may be appropriately set according to the properties of the thermoplastic resin. The temperature at which the material for 3D printing is melted may be, for example, a temperature of + 10°C to 150°C based on the higher one of the melting point and the glass transition temperature (Tg) of the thermoplastic resin.

In the melting step, for example, the material for 3D printing may be melted and kneaded. In particular, when the material for 3D printing contains glass fiber, the material for 3D printing is preferably melted and kneaded in the melting step. As the material for 3D printing is melted and kneaded, the material for 3D printing tends to be more uniformly mixed. Thus, occurrence of unevenness of the material of the obtained 3D printed object is easily suppressed. As a result, deformation of the 3D printed object tends to be further suppressed.

(Shaping step)

In the shaping step in the present disclosure, the material for 3D printing melted in the melting step is extruded from the nozzle to shape a 3D printed object.

In the shaping step, for example, the 3D printed object can be shaped by extruding the melted material for 3D printing from the nozzle of the 3D printed object manufacturing apparatus, and sequentially stacking a two-dimensional layer on a substrate based on a plurality of pieces of two-dimensional data. The plurality of pieces of two-dimensional data is generated by slicing three-dimensional coordinate data of the 3D printed object to be shaped by slicer software.

The 3D printed object manufacturing apparatus may be a material extrusion type 3D printed object manufacturing apparatus. The material extrusion type 3D printed object manufacturing apparatus is not particularly limited, and a known apparatus or a known apparatus configuration can be applied.

The 3D printed object manufacturing apparatus may be, for example, an apparatus including a cylinder, a nozzle, and heating means. The material for 3D printing is supplied to the cylinder. The nozzle is provided at a portion of the cylinder on the downstream side in a discharging direction of the material for 3D printing. The nozzle discharges the material for 3D printing. The cylinder includes the heating means. The heating means heats and melts the material for 3D printing.

The 3D printed object manufacturing apparatus extrudes the heated and melted material for 3D printing from the nozzle, and stacks and shapes the material for 3D printing extruded from the nozzle. Thus, the 3D printed object is shaped.

The cylinder may have a screw therein. The screw kneads the 3D printing material.

The 3D printed object manufacturing apparatus may further include a table device. The table device is disposed facing the nozzle. The material for 3D printing in the molten state extruded from the nozzle is stacked on the table device.

The 3D printed object manufacturing apparatus may further include control means. The control means controls spatial coordinates of the substrate and the nozzle, and the amount of the material for 3D printing extruded from the nozzle. The control means preferably controls discharge of the material for 3D printing in the molten state extruded from the nozzle, and controls movement of the nozzle and/or the table device in the X-axis, Y-axis, and Z-axis directions with respect to a reference surface.

(Other steps)

The method of manufacturing a 3D printed object of the present disclosure may further include, for example, a processing step. In the processing step, the 3D printed object shaped in the shaping step is processed.

<3D printed object>

The 3D printed object of the present disclosure is a shaped object of the above-described material for 3D printing of the present disclosure.

As a raw material of the 3D printed object of the present disclosure, the material for 3D printing of the present disclosure is used. Thus, deformation due to thermal shrinkage or the like of the 3D printed object is suppressed.

The 3D printed object of the present disclosure is not particularly limited as long as it is a shaped object of the material for 3D printing of the present disclosure described above, and may be shaped by any method. In particular, the 3D printed object of the present disclosure is preferably one shaped by the above-described method of manufacturing a 3D printed object of the present disclosure.

Example

Hereinafter, the present disclosure will be described more specifically with reference to examples, but the present disclosure is not limited to the following examples unless the gist thereof is exceeded. Unless otherwise specified, "part" is indicated on a mass basis. Each of the melting point, the Shore hardness, the MFR, the crystallization temperature, the degree of crystallinity, the tensile modulus X, the thermal expansion coefficient, the tensile stress (at break), the average warpage amount Y, and the tensile modulus Y described below was measured by the above-described method.

-Provision of material-

Details of the material (that is, the components contained in the material for 3D printing) used in the present Example are as follows.

(Thermoplastic elastomer)

- • DF8200: TAFMER (registered trademark; hereinafter, the same shall apply) DF8200 (Mitsui Chemicals, Inc.)
- • XM7090: TAFMER XM-7090 (Mitsui Chemicals, Inc.)
- • DF610: TAFMER DF610 (Mitsui Chemicals, Inc.)
- • DF710: TAFMER DF710 (Mitsui Chemicals, Inc.)
- • PN2070: TAFMER PN-2070 (Mitsui Chemicals, Inc.)
- • PN3560: TAFMER PN-3560 (Mitsui Chemicals, Inc.)
- • EP1001: ABSORTOMER EP1001 (Mitsui Chemicals, Inc.)
- • TS6000N: MILASTOMER TS6000N (Mitsui Chemicals, Inc.)
- • 6030NS: MILASTOMER 6030NS (Mitsui Chemicals, Inc.)

(Thermoplastic resin)

- • J966HP: PRIMEPOLYPRO (registered trademark; hereinafter, the same shall apply) J-966HP (propylene-ethylene copolymer, Prime Polymer Co., Ltd.)
- • J105G: PRIMEPOLYPRO J-105G (propylene homopolymer, Prime Polymer Co., Ltd.)
- • J108M: PRIMEPOLYPRO J108M (propylene homopolymer, Prime Polymer Co., Ltd.)
- • J721GR: PRIMEPOLYPRO J721GR (propylene-ethylene copolymer, Prime Polymer Co., Ltd.)
- • J229E: PRIMEPOLYPRO J229E (propylene-ethylene copolymer, Prime Polymer Co., Ltd.)
- • J707G: PRIMEPOLYPRO J707G (propylene-ethylene copolymer, Prime Polymer Co., Ltd.)
- • J705UG: PRIMEPOLYPRO J705UG (propylene-ethylene copolymer, Prime Polymer Co., Ltd.)
- • J708UG: PRIMEPOLYPRO J708UG (propylene-ethylene copolymer, Prime Polymer Co., Ltd.)

(Filler)

- • Talc: volume average particle diameter 5 $\mu$m to 10 $\mu$m
- • Glass fiber (GF): weight average fiber length 0.5 to 2 mm

The melting point, Shore hardness, and MFR of the thermoplastic elastomer, the crystallization temperature of the thermoplastic resin, and a manufacturer's catalog value of the degree of crystallinity are shown in Tables 1 to 6.

In the table, "A" before the numerical value in the "Shore hardness" column represents the Shore A hardness.

In the table, "D" before the numerical value in the "Shore hardness" column represents the Shore D hardness. For example, "A86" in Example 1 indicates that the Shore A hardness is 86. Similarly, "D58" in Example 9 indicates that the Shore D hardness is 58.

In the table, the items of "Melting point: Tm [°C]", "Shore hardness", and "MFR [g/min]" located immediately below the item of "(Thermoplastic elastomer)" indicate respective catalog values of the melting point, the Shore hardness, and the MFR of the thermoplastic elastomer.

In the table, the respective items of "Crystallization temperature: Tc [°C]" and "Degree of crystallinity [%]" located immediately below the item of "(Thermoplastic resin)" indicate catalog values of the crystallization temperature and the degree of crystallinity of the thermoplastic resin (propylene-based polymer) which is a constituent component of the material for 3D printing.

[Examples 1 to 38 and Comparative Examples 1 to 19]

-Measurement of tensile modulus X of hot pressed article for measurement-

The material for 3D printing was hot-press molded under the conditions of a heating temperature of 200°C, a pressing pressure of 50 MPa, and a pressing time of 3 minutes to obtain the above-described hot pressed article for measurement. The obtained hot pressed article for measurement was an IBA-shaped test specimen defined in JIS K7161-2: 2014. The total length of the hot pressed article for measurement was 75 mm. The thickness of the hot pressed article for measurement was 2 mm.

The tensile modulus X of the obtained hot pressed article for measurement was measured. The measurement results are shown in Tables 1 to 6.

In the table, the item of "Tensile modulus X [MPa]" located immediately below the item of "(Hot pressed article)" indicates the measurement result of the tensile modulus X of the hot pressed article for measurement.

In the table, the content (%) also shown in the thermoplastic resin means the mass content of the thermoplastic resin with respect to the total mass of the material for 3D printing. The content (%) also shown in the thermoplastic elastomer means the mass content of the thermoplastic elastomer with respect to the total mass of the material for 3D printing. The content (%) also shown in the filler means the content of the filler with respect to the total mass of the material for 3D printing.

-Melting point, crystallization temperature, and thermal expansion coefficient of hot pressed article for measurement-

A hot pressed article for measurement was obtained in the same manner as in "Measurement of tensile modulus X of hot pressed article for measurement". The melting point, the crystallization temperature, and the thermal expansion coefficient of the hot pressed article for measurement were measured. The measurement results are shown in Tables 1 to 6.

In the table, "Melting point: Tm [°C]", "Crystallization temperature: Tc [°C]", and "Thermal expansion coefficient [$10^{-5}$/°C]" located below the item of "(Hot pressed article)" indicate the measurement results of the melting point, the crystallization temperature, and the thermal expansion coefficient of the hot pressed article for measurement.

In the table, "-" in the column of "Component and content" indicates that the corresponding component is not contained, and "-" is also shown in the corresponding physical property column.

In the table, "-" in the column of "Physical properties and evaluation" indicates that the corresponding measurement or evaluation is not performed.

-Measurement of deformation (average warpage amount Y) of shaped, honeycomb object 10 for measurement-

For the shaping of the shaped, honeycomb obj ect 10 for measurement described above, a material extrusion type 3D printed object manufacturing apparatus ("DeltaWASP 3MT Industrial" manufactured by WASP Corp, Ltd., nozzle diameter: 3 mm) and application software ("Simplify 3D" manufactured by Simplify 3D) were used.

First, the material for 3D printing described in Tables 1 to 6 was charged into a hopper, and the material for 3D printing was supplied into the cylinder through the hopper. As components constituting the material for 3D printing, thermoplastic elastomers, thermoplastic resins, and fillers shown in each table were used. Next, the temperature of the material for 3D printing was increased to 180°C to 240°C by a heater provided in the cylinder to melt the material (melting step).

Next, the following 3D data was sliced by the application software to generate a plurality of pieces of two-dimensional data. A setting parameter of the application software was set as follows based on the plurality of pieces of two-dimensional data, and the shaped, honeycomb object 10 for measurement as shown in Fig. 1 was shaped by material extrusion (MEX: Material Extrusion). Specifically, a 3D printed object having a rectangular parallelepiped shape having a size of 250 mm × 100 mm × a height of 15 mm and a fill density of 30% in the full honeycomb was shaped by sequentially stacking the molten material for 3D printing on the substrate based on three-dimensional coordinate data (shaping step).

<3D data>

• Rectangular parallelepiped of 250 mm × 100 mm × height of 15 mm

<Setting parameter of honeycomb structural portion 11 of shaped, honeycomb object 10 for measurement>

- Shaping speed: 3000 mm/min
- Nozzle temperature: 240°C
- Lamination pitch: 1.5 mm
- Fill density: 30%
- Fill pattern: honeycomb

<Setting parameter of rectangular parallelepiped frame portion 12 of shaped, honeycomb object 10 for measurement>

- Shaping speed: 3000 mm/min
- Nozzle temperature: 240°C
- Lamination pitch: 1.5 mm
- Fill density: 100%
- Fill pattern: solid

The average warpage amount Y (mm) of the obtained shaped, honeycomb object 10 for measurement was measured. The measurement results are shown in Tables 1 to 6.

In this evaluation, an example indicated by "-" in the table means that the shaped, honeycomb object 10 for measurement necessary for measurement could not be obtained due to deformation during shaping.

In the table, the "Average warpage amount Y" located below the item of "(3D printed object)" indicates the average warpage amount Y of the shaped, honeycomb object 10 for measurement.

-Evaluation of appearance and surface of shaped, honeycomb object 10 for measurement-

The appearance and the state of the surface of the shaped, honeycomb object 10 for measurement were visually evaluated according to the following evaluation criteria. The evaluation results are shown in Tables 1 to 6.

In the table, the "Evaluation of appearance and surface" located below the item of "(3D printed object)" indicates the evaluation results of the appearance and the surface of the shaped, honeycomb object 10 for measurement.

<Evaluation criteria>

G1: The surface of the shaped, honeycomb object 10 for measurement is smooth, the appearance is also good, and the 3D data (three-dimensional coordinate data) can be more faithfully reproduced.

G2: The surface of the shaped, honeycomb object 10 for measurement is smooth, and the appearance is good.

G3: Although the surface of the shaped, honeycomb object 10 for measurement has slight irregularities, the appearance is acceptable.

G4: Unallowable remarkable irregularities are observed on the surface of the shaped, honeycomb object 10 for measurement, or the 3D data (three-dimensional coordinate data) cannot be reproduced.

-Measurement of tensile stress α (at break) and tensile modulus Z of shaped object for measurement-

For the shaping of the shaped object for measurement described above, a material extrusion type 3D printed object manufacturing apparatus ("DeltaWASP 3MT Industrial" manufactured by WASP Corp, Ltd., nozzle diameter: 2 mm) and application software ("Simplify 3D" manufactured by Simplify 3D) were used.

First, the material for 3D printing described in Tables 1 to 6 was charged into a hopper, and the material for 3D printing was supplied into the cylinder through the hopper. As components constituting the material for 3D printing, thermoplastic elastomers, thermoplastic resins, and fillers shown in each table were used. Next, the temperature of the material for 3D printing was increased to 180°C to 240°C by a heater provided in the cylinder to melt the material (melting step).

Next, the following 3D data was sliced by the application software to generate a plurality of pieces of two-dimensional data. The setting parameter of the application software was set as follows based on the plurality of pieces of two-dimensional data, and the shaped object for measurement before machining was shaped by material extrusion (MEX: Material Extrusion) (shaping step).

<3D data>

• Rectangular parallelepiped of 130 mm × 130 mm × height of 2 mm

<Setting parameter>

• Shaping speed: 3000 mm/min
• Nozzle temperature: 240°C
• Lamination pitch: 1.0 mm
• Fill density: 100%
• Fill pattern: solid

Next, the obtained shaped object for measurement before machining was machined to obtain a shaped object for measurement. The obtained shaped object for measurement was an IBA-shaped test specimen defined in JIS K7161-2: 2014. The total length of the hot pressed article for measurement was 75 mm. The thickness of the shaped object for measurement was 2 mm.

Each of the tensile stress $\alpha$ (at break) and the tensile modulus Z of the shaped object for measurement was measured. When the tensile stress $\alpha$ (at break) and the tensile modulus Z of the shaped object for measurement were measured, the stacking direction of the material for 3D printing and the tensile direction of the shaped object for measurement in the tensile test were in a parallel relationship. The measurement results are shown in Tables 1 to 6.

In the table, "Tensile stress $\alpha$ (at break) [MPa]" and "Tensile modulus Z [MPa]" located below the item of "(3D printed object)" indicate the measurement results of the tensile stress (at break) and the tensile modulus Z of the shaped object for measurement.

[Table 1]

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Constituent component and content | Thermoplastic resin (polypropylene) | J966HP: 60% | J966HP: 50% | J966HP: 40% | J966HP: 30% | J966HP: 50% | J966HP: 45% | J966HP: 40% | J105G: 50% | J966HP: 50% | J966HP: 30% |
| | Thermoplastic elastomer | DF8200: 30% | DF8200: 30% | DF8200: 30% | DF8200: 30% | DF8200: 30% | DF8200: 30% | DF8200: 30% | DF8200: 30% | XM7090: 30% | XM7090: 30% |
| | Filler (inorganic filler) | Talc: 10% | Talc: 20% | Talc: 30% | Talc: 40% | Short fiber GF: 10% Talc: 10% | Short fiber GF: 5% Talc:20% | Short fiber GF: 10% Talc: 20% | Talc: 20% | Talc: 20% | Talc: 40% |
| Physical properties and evaluation | **(Thermoplastic elastomer)** | | | | | | | | | | |
| | Melting point: Tm [°C] | 66 | 66 | 66 | 66 | 66 | 66 | 66 | 66 | 98 | 98 |
| | Shore hardness | A86 | A86 | A86 | A86 | A86 | A86 | A86 | A86 | D58 | D58 |
| | MFR [g/min] | 33 | 33 | 33 | 33 | 33 | 33 | 33 | 33 | 7.0 | 7.0 |
| | **(Thermoplastic resin)** | | | | | | | | | | |
| | Crystallization temperature: Tc [°C] | 126.4 | 126.2 | 127.2 | 127.8 | 126.5 | 128.6 | 127.8 | 128.7 | 124.8 | 124.9 |
| | Degree of crystallinity [%] | 39.5 | 39.5 | 39.5 | 39.5 | 39.5 | 39.5 | 39.5 | 52.2 | 39.5 | 39.5 |
| | **(Hot pressed article)** | | | | | | | | | | |
| | Tensile modulus X [MPa] | 561 | 334 | 629 | 723 | 793 | 985 | 1310 | 860 | 1200 | 1870 |
| | Melting point: Tm [°C] | 162.6 | 163 | 163.3 | 163.4 | 162.3 | 162.7 | 162.2 | 165 | 159.1 | 164.3 |

(continued)

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| | Crystallization temperature: Tc [°C] | 126.4 | 126.2 | 127.2 | 127.8 | 126.5 | 128.6 | 127.8 | 128.7 | 124.8 | 124.9 |
| | Thermal expansion coefficient [$10^{-5}$/°C] | - | - | - | 8.9 | - | - | - | - | 11.7 | - |
| | **(3D printed object)** | | | | | | | | | | |
| | Tensile stress $\alpha$ (at break) [MPa] | 4.6 | 5.6 | 5.6 | 5.5 | 6.3 | 6.1 | 5.9 | 4.5 | 9.7 | 7.7 |
| | Average warpage amount Y [mm] | 2.6 | 1.7 | 0.9 | 0.9 | 1.4 | 1.1 | 1.1 | 0.4 | 2.9 | 1.4 |
| | Evaluation of appearance and surface | G1 | G1 | G1 | G1 | G1 | G1 | G1 | G1 | G1 | G1 |
| | Tensile modulus Z [MPa] | 328 | 358 | 242 | 416 | 423 | 503 | 640 | 250 | 806 | 1016 |

[Table 2]

| | | Example 11 | Example 12 | Example 13 | Example 14 | Example 15 | Example 16 | Example 17 | Example 18 | Example 19 | Example 20 |
|---|---|---|---|---|---|---|---|---|---|---|---|
| Constituent component and content | Thermoplastic resin (polypropylene) | J966HP: 70% | J966HP: 70% | J966HP: 50% | J966HP: 70% | J966HP: 70% | J966HP: 60% | J966HP: 60% | J105G: 50% | J105G: 70% | J105G: 60% |
| | Thermoplastic elastomer | DF8200: 10% | XM7090: 10% | XM7090: 10% | PN2070: 10% | PN3560: 10% | PN2070: 10% | PN3560: 10% | XM7090: 30% | PN3560: 10% | XM7090: 10% |
| | **Filler (inorganic filler)** | Talc: 20% | Talc: 20% | Talc: 40% | Talc: 20% | Talc: 20% | Talc: 30% | Talc:30% | Talc: 20% | Talc: 20% | Talc:30% |
| Physical properties and evaluation | **(Thermoplastic elastomer)** | | | | | | | | | | |
| | Melting point: Tm [°C] | 66 | 98 | 98 | 140 | 160 | 140 | 160 | 98 | 160 | 98 |
| | Shore hardness | A86 | D58 | D58 | A75 | A72 | A75 | A72 | D58 | A72 | D58 |
| | MFR [g/min] | 33 | 7.0 | 7.0 | 7.0 | 6.0 | 7.0 | 6.0 | 7.0 | 6.0 | 7.0 |
| | **(Thermoplastic resin)** | | | | | | | | | | |
| | Crystallization temperature: Tc [°C] | 130 | 130 | 130 | 130 | 130 | 130 | 130 | 116.4 | 116.4 | 116.4 |
| | Degree of crystallinity [%] | 39.5 | 39.5 | 39.5 | 39.5 | 39.5 | 39.5 | 39.5 | 52.2 | 52.2 | 52.2 |
| | **(Hot pressed article)** | | | | | | | | | | |
| | Tensile modulus X [MPa] | 802 | 1113 | 1748 | 808 | 1062 | 1295 | 1170 | 1496 | 1906 | 2254 |
| | Melting point: Tm [°C] | 160.2 | 159 | 159.7 | 159.5 | 159.2 | 159.1 | 159.9 | 159.1 | 161.4 | 161.3 |
| | Crystallization temperature: Tc [°C] | 122.7 | 122.5 | 123.3 | 121.8 | 122.3 | 122.8 | 122.6 | 122 | 123.5 | 124 |

| | | Example 11 | Example 12 | Example 13 | Example 14 | Example 15 | Example 16 | Example 17 | Example 18 | Example 19 | Example 20 |
|---|---|---|---|---|---|---|---|---|---|---|---|
| | Thermal expansion coefficient [$10^{-5}$/°C] | 10.0 | 8.7 | 7.6 | 10.4 | 9.7 | 8.8 | 9.1 | 8.8 | 7.7 | 6.6 |
| | **(3D printed object)** | | | | | | | | | | |
| | Tensile stress $\alpha$ (at break) [MPa] | 7.3 | 9.1 | 6.7 | 7.5 | 8.0 | 7.4 | 7.6 | 10.9 | 10.7 | 9.6 |
| | Average warpage amount Y [mm] | 4.3 | 4.0 | 2.9 | 4.5 | 4.1 | 2.9 | 3.1 | 3.4 | 6.0 | 5.6 |
| | Evaluation of appearance and surface | G2 | G2 | G1 | G2 | G1 | G1 | G1 | G2 | G2 | G2 |
| | Tensile modulus Z [MPa] | 645 | 847 | 1029 | 617 | 517 | 853 | 549 | 1270 | 1507 | 1982 |

[Table 3]

| Constituent component and content | | Example 21 | Example 22 | Example 23 | Example 24 | Example 25 | Example 26 | Example 27 | Example 28 | Example 29 | Example 30 |
|---|---|---|---|---|---|---|---|---|---|---|---|
| | Thermoplastic resin (polypropylene) | J105G: 40% | J105G: 60% | J105G: 60% | J105G: 50% | J105G: 40% | J105G: 60% | J105G: 50% | J105G: 40% | J105G: 30% | J105G: 60% |
| | Thermoplastic elastomer | XM7090: 30% | PN2070: 10% | PN3560: 10% | XM7090: 10% | XM7090: 10% | XM7090: 20% | XM7090 : 20% | XM7090: 20% | XM7090 : 20% | XM7090: 30 % |
| | **Filler (inorganic filler)** | Talc:30% | Talc:30% | Talc:30% | Talc:40% | Talc:50% | Talc:20% | Talc:30% | Talc:40% | Talc:50% | Talc: 10% |
| Physical properties and evaluation | **(Thermoplastic elastomer)** | | | | | | | | | | |
| | Melting point: Tm [°C] | 66 | 140 | 160 | 98 | 98 | 98 | 98 | 98 | 98 | 98 |
| | Shore hardness | D58 | A75 | A72 | D58 | D58 | D58 | D58 | D58 | D58 | D58 |
| | MFR [g/min] | 7.0 | 7.0 | 6.0 | 7.0 | 7.0 | 7.0 | 7.0 | 7.0 | 7.0 | 7.0 |
| | **(Thermoplastic resin)** | | | | | | | | | | |
| | Crystallization temperature: Tc [°C] | 116.4 | 116.4 | 116.4 | 116.4 | 116.4 | 116.4 | 116.4 | 116.4 | 116.4 | 116.4 |
| | Degree of crystallinity [%] | 52.2 | 52.2 | 52.2 | 52.2 | 52.2 | 52.2 | 52.2 | 52.2 | 52.2 | 52.2 |
| | **(Hot pressed article)** | | | | | | | | | | |
| | Tensile modulus X [MPa] | 1626 | 2097 | 2401 | 2384 | 2514 | 1930 | 1940 | 2071 | 2200 | 1365 |
| | Melting point: Tm [°C] | 158.3 | 161.3 | 161.5 | - | - | - | - | - | - | - |

(continued)

| | Example 21 | Example 22 | Example 23 | Example 24 | Example 25 | Example 26 | Example 27 | Example 28 | Example 29 | Example 30 |
|---|---|---|---|---|---|---|---|---|---|---|
| Crystallization temperature: Tc [°C] | 122.2 | 123.9 | 124.1 | - | - | - | - | - | - | - |
| Thermal expansion coefficient [$10^{-5}$/°C] | 7.6 | 7.9 | 6.3 | - | - | - | - | - | - | - |
| **(3D printed object)** | | | | | | | | | | |
| tensile stress α (at break) [MPa] | 8.8 | 9.9 | 9.5 | 7.8 | 6.0 | 11.1 | 9.2 | 7.3 | 5.4 | 13.0 |
| Average warpage amount Y [mm] | 2.9 | 5.5 | 5.9 | 4.9 | 4.2 | 4.9 | 4.3 | 3.9 | 3.4 | 5.4 |
| Evaluation of appearance and surface | G1 | G2 | G2 | G2 | G2 | G2 | G2 | G1 | G1 | G2 |
| Tensile modulus Z [MPa] | 1507 | 1742 | 1887 | 2031 | 2080 | 1601 | 1744 | 1887 | 2030 | 1033 |

[Table 4]

| | | Example 31 | Example 32 | Example 33 | Example 34 | Example 35 | Example 36 | Example 37 | Example 38 |
|---|---|---|---|---|---|---|---|---|---|
| Constituent component and content | Thermoplastic resin (polypropylene) | J105G:30% | J105G:20% | J105G:50% | J105G:40% | J105G:30% | J105G:20% | J105G:10% | J108M50% |
| | Thermoplastic elastomer | XM7090: 30% | XM7090: 30% | XM7090: 40% | XM7090: 40% | XM7090: 40% | XM7090: 40% | XM7090: 40% | XM7090 30% |
| | Filler (inorganic filler) | Talc:40% | Talc:50% | Talc: 10% | Talc:20% | Talc:30% | Talc:40% | Talc:50% | Talc:20% |
| Physical properties and evaluation | **(Thermoplastic elastomer)** | | | | | | | | |
| | Melting point: Tm [°C] | 98 | 98 | 98 | 98 | 98 | 98 | 98 | 98 |
| | Shore hardness | D58 | D58 | D58 | D58 | D58 | D58 | D58 | D58 |
| | MFR [g/min] | 7.0 | 7.0 | 7.0 | 7.0 | 7.0 | 7.0 | 7.0 | 7.0 |
| | **(Thermoplastic resin)** | | | | | | | | |
| | Crystallization temperature: Tc [°C] | 116.4 | 116.4 | 116.4 | 116.4 | 116.4 | 116.4 | 116.4 | 128 |
| | Degree of crystallinity [%] | 52.2 | 52.2 | 52.2 | 52.2 | 52.2 | 52.2 | 52.2 | 53 |
| | **(Hot pressed article)** | | | | | | | | |
| | Tensile modulus X [MPa] | 1755 | 1887 | 1202 | 1332 | 1462 | 1592 | 1722 | 1658 |
| | Melting point: Tm [°C] | - | - | - | - | - | - | - | - |
| | Crystallization temperature: Tc [°C] | - | - | - | - | - | - | - | - |

| | | Example 31 | Example 32 | Example 33 | Example 34 | Example 35 | Example 36 | Example 37 | Example 38 |
|---|---|---|---|---|---|---|---|---|---|
| | Thermal expansion coefficient [$10^{-5}$/°C] | - | - | - | - | - | - | - | - |
| | **(3D printed object)** | | | | | | | | |
| | Tensile stress $\alpha$ (at break) [MPa] | 6.7 | 4.6 | 12.6 | 10.5 | 8.4 | 6.3 | 4.2 | 12.9 |
| | Average warpage amount Y [mm] | 2.4 | 1.9 | 4.4 | 2.3 | 1.8 | 1.3 | 0.8 | 3.8 |
| | Evaluation of appearance and surface | G1 | G1 | G2 | G1 | G1 | G1 | G1 | G1 |
| | Tensile modulus Z [MPa] | 1744 | 1981 | 891 | 1128 | 1365 | 1602 | 1839 | 1347 |

[Table 5]

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|
| Constituent component and content | Thermoplastic resin (polypropylene) | J105G:100% | J108M:100% | J721GR: 100% | J229E:100% | J707G:100% | J966HP: 100% | J705UG: 100% | J708UG: 100% | J966HP:80% | J966HP:80% |
| | Thermoplastic elastomer | - | - | - | - | - | - | - | - | DF610:20% | DF710:20% |
| | Filler (inorganic filler) | - | - | - | - | - | - | - | - | - | - |
| Physical properties and evaluation | **(Thermoplastic elastomer)** | | | | | | | | | | |
| | Melting point: Tm [°C] | - | - | - | - | - | - | - | - | <50 | 55 |
| | Shore hardness | - | - | - | - | - | - | - | - | A57 | A73 |
| | MFR [g/min] | - | - | - | - | - | - | - | - | 2.2 | 3.6 |
| | **(Thermoplastic resin)** | | | | | | | | | | |
| | Crystallization temperature: Tc [°C] | 116.4 | 128 | 121.6 | 120.5 | 120.4 | 130 | 128.7 | 129.2 | 130.0 | 130.0 |
| | Degree of crystallinity [%] | 52.2 | 53.1 | 42.6 | 36.6 | 47.3 | 39.5 | 46.9 | 50.2 | 39.5 | 39.5 |
| | **(Hot pressed article)** | | | | | | | | | | |
| | Tensile modulus X [MPa] | 1600 | 2000 | 1200 | 1030 | 1200 | 969 | 1450 | 1500 | 541 | 637 |
| | Melting point: Tm [°C] | 163.1 | 164.8 | 151.6 | 148.8 | 164.2 | 164 | 166.9 | 165.7 | 163.5 | 164.3 |

EP 4 035 881 A1

26

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|
| | Crystallization temperature: Tc [°C] | 116.4 | 128 | 121.6 | 120.5 | 120.4 | 130 | 128.7 | 129.2 | 128.9 | 128.9 |
| | Thermal expansion coefficient [$10^{-5}$/°C] | - | - | - | - | - | 12.7 | - | - | - | - |
| | **(3D printed object)** | | | | | | | | | | |
| | Tensile stress $\alpha$ (at break) [MPa] | - | - | - | - | - | 12.2 | - | - | - | - |
| | Average warpage amount Y [mm] | 13.0 | 17.4 | 8.4 | 8.1 | - | 8.4 | - | 12.3 | 6.9 | 6.3 |
| | Evaluation of appearance and surface | G4 | G4 | G4 | G4 | G4 | G4 | G4 | G4 | G3 | G3 |
| | Tensile modulus Z [MPa] | - | - | - | - | - | - | - | - | - | - |

27

[Table 6]

| | | Comparative Example 11 | Comparative Example 12 | Comparative Example 13 | Comparative Example 14 | Comparative Example 15 | Comparative Example 16 | Comparative Example 17 | Comparative Example 18 | Comparative Example 19 |
|---|---|---|---|---|---|---|---|---|---|---|
| Constituent component and content | Thermoplastic resin (polypropylene) | J966HP:80% | J966HP:80% | J966HP:80% | J966HP:80% | J966HP:70% | J966HP:70% | J229E:80% | J229E:80% | J229E:80% |
| | Thermoplastic elastomer | XM7090:20% | EP1001:20% | TS6000N: 20% | 6030NS:20% | TS6000N: 30% | 6030NS:30% | XM7090:20% | TS6000N: 20% | 6030NS:20% |
| | Filler (inorganic filler) | - | - | - | - | - | - | - | - | - |
| Physical properties and evaluation | **(Thermoplastic elastomer)** | | | | | | | | | |
| | Melting point: Tm [°C] | 98 | None | 154 | 156 | 154 | 156 | 98 | 154 | 156 |
| | Shore hardness | D58 | A92 | A58 | A58 | A58 | A58 | D58 | A58 | A58 |
| | MFR [g/min] | 7.0 | 10 | 11 | 40 | 11 | 40 | 7.0 | 11 | 40 |
| | **(Thermoplastic resin)** | | | | | | | | | |
| | Crystallization temperature: Tc [°C] | 130.0 | 130.0 | 130.0 | 130.0 | 130.0 | 130.0 | 120.5 | 120.5 | 120.5 |
| | Degree of crystallinity [%] | 39.5 | 39.5 | 39.5 | 39.5 | 39.5 | 39.5 | 36.6 | 36.6 | 36.6 |
| | **(Hot pressed article)** | | | | | | | | | |
| | Tensile modulus X [MPa] | 988 | 706 | 498 | 440 | 398 | 352 | 940 | 628 | 670 |
| | Melting point: Tm [°C] | 163.1 | 162 | 161.3 | 162.6 | 161 | 161.8 | 147.2 | 148.4 | 148.6 |

(continued)

| | Comparative Example 11 | Comparative Example 12 | Comparative Example 13 | Comparative Example 14 | Comparative Example 15 | Comparative Example 16 | Comparative Example 17 | Comparative Example 18 | Comparative Example 19 |
|---|---|---|---|---|---|---|---|---|---|
| Crystallization temperature: Tc [°C] | 129.4 | 131 | 127.8 | 127.9 | 126.7 | 125.6 | 119.3 | 120.5 | 120.8 |
| Thermal expansion coefficient [$10^{-5}$/°C] | 13.7 | - | - | - | - | - | - | - | - |
| **(3D printed object)** | | | | | | | | | |
| Tensile stress $\alpha$ (at break) [MPa] | - | - | - | - | - | 7.52 | - | - | - |
| Average warpage amount Y [mm] | 6.6 | 6.9 | 7.1 | 6.5 | 6.6 | 6.3 | 6.3 | 6.1 | 6.5 |
| Evaluation of appearance and surface | G3 | G3 | G3 | G3 | G3 | G3 | G3 | G3 | G3 |
| Tensile modulus Z [MPa] | - | - | - | - | - | 341 | - | - | - |

As shown in Tables 1 to 6, the materials for 3D printing of Examples 1 to 38 include a thermoplastic resin, a thermoplastic elastomer, and a filler. The filler includes talc. The content of the filler was 5% by mass or more and 70% by mass or less with respect to the total mass of the material for 3D printing. Thus, the average warpage amount Y of the shaped, honeycomb object 10 for measurement was 6.0 mm or less. That is, it was found that deformation (particularly, warpage) of the 3D printed object using the materials for 3D printing of Examples 1 to 38 was suppressed.

The materials for 3D printing of Examples 7 to 9 are fillers obtained by combining talc and glass fiber. Thus, it was found that the 3D printed object using the materials for 3D printing of Examples 7 to 9 had a small stress strain and a smooth appearance.

On the other hand, the materials for 3D printing of Comparative Examples 1 to 8 were formed from a thermoplastic resin, and did not contain a thermoplastic elastomer and a filler. The materials for 3D printing of Comparative Examples 9 to 19 were formed from a thermoplastic resin and a thermoplastic elastomer, and did not contain a filler. Thus, the average warpage amount Y of the shaped, honeycomb object 10 for measurement was more than 6.0 mm. That is, it was found that deformation (particularly, warpage) of the 3D printed object using the materials for 3D printing of Comparative Examples 1 to 19 was not suppressed.

The disclosure of Japanese Patent Application No. 2019-174751, filed on Sep. 25, 2019, and the disclosure of Japanese Patent Application No. 2020-071719, filed on Apr. 13, 2020, are incorporated herein by reference in their entirety.

All publications, patent applications, and technical standards mentioned in this description are incorporated herein by reference to the same extent as if each individual publication, patent application, or technical standard was specifically and individually indicated to be incorporated by reference.

**Claims**

1. A material for 3D printing, the material comprising a thermoplastic resin, a thermoplastic elastomer, and a filler, wherein:

    the filler contains talc, and
    a content of the filler is 5% by mass or more and 70% by mass or less with respect to a total mass of the material for 3D printing.

2. The material for 3D printing according to claim 1, wherein a content of the thermoplastic resin is 0.1% by mass or more and less than 100% by mass with respect to the total mass of the material for 3D printing.

3. The material for 3D printing according to claim 1 or 2, wherein a content of the thermoplastic elastomer is 10% by mass or more and less than 100% by mass with respect to the total mass of the material for 3D printing.

4. The material for 3D printing according to any one of claims 1 to 3, wherein the thermoplastic resin contains a propylene-based polymer.

5. The material for 3D printing according to any one of claims 1 to 4, wherein:

    a tensile modulus X (MPa) of a hot pressed article for measurement in accordance with JIS K 7161-2: 2014 at a time of molding into the hot pressed article for measurement satisfies the following formula (I);
    an average warpage amount Y (mm) of a shaped, honeycomb object for measurement at a time of stacking and shaping into the shaped, honeycomb object for measurement satisfies the following formula (IIa);
    the hot pressed article for measurement is an IBA-shaped test specimen defined in JIS K 7161-2: 2014 obtained by hot-press molding the material for 3D printing;
    the shaped, honeycomb object for measurement includes:

       a rectangular parallelepiped frame portion of 250 mm × 100 mm × a height of 15 mm, obtained by stacking and shaping the material for 3D printing by material extrusion such that a fill density indicating a ratio of a volume of the material for 3D printing to a unit space volume is 100%, and
       a honeycomb structural portion obtained by stacking and shaping the material for 3D printing in the rectangular parallelepiped frame portion by material extrusion such that the fill density is 30%; and

    the average warpage amount Y indicates an arithmetic average value of floating quantities of four corners of the rectangular parallelepiped frame portion from a surface plate when the shaped, honeycomb object for measurement is placed on the surface plate:

$$\text{Formula (I)} \quad 50 \le X \le 4000,$$

$$\text{Formula (IIa)} \quad 0 \le Y \le 6.0.$$

6. The material for 3D printing according to any one of claims 1 to 5, wherein a content of the thermoplastic elastomer is 10% by mass or more and less than 70% by mass with respect to the total mass of the material for 3D printing,

a content of the filler is 10% by mass or more and less than 50% by mass with respect to the total mass of the material for 3D printing, and
a sum of the content of the thermoplastic elastomer and the content of the filler is 20% by mass or more and less than 90% by mass with respect to the total mass of the material for 3D printing.

7. The material for 3D printing according to any one of claims 1 to 6, wherein a tensile stress $\alpha$ (at break) [MPa] of the shaped object for measurement in a tensile test in accordance with JIS K 7161-2: 2014 at a time of stacking and shaping into the shaped object for measurement satisfies the following formula (III),

an average warpage amount Y (mm) of a shaped, honeycomb object for measurement at a time of stacking and shaping into the shaped, honeycomb object for measurement satisfies the following formula (IIb),
the shaped object for measurement is an IBA-shaped test specimen defined in JIS K 7161-2: 2014 and obtained by machining after the material for 3D printing is stacked and shaped by material extrusion such that a fill density indicating a ratio of a volume of the material for 3D printing to a unit space volume is 100% and a stacking direction of the material for 3D printing is parallel to a tensile direction of the shaped object for measurement in the tensile test,
the shaped, honeycomb object for measurement includes:

a rectangular parallelepiped frame portion of 250 mm × 100 mm × a height of 15 mm, obtained by stacking and shaping the material for 3D printing by material extrusion such that the fill density is 100%, and
a honeycomb structural portion obtained by stacking and shaping the material for 3D printing in the rectangular parallelepiped frame portion by material extrusion such that the fill density is 30%, and

the average warpage amount Y indicates an arithmetic average value of floating quantities of four corners of the rectangular parallelepiped frame portion from a surface plate when the shaped, honeycomb object for measurement is placed on the surface plate:

$$\text{Formula (III)} \quad 6.5 \le \alpha < 200,$$

$$\text{Formula (IIb)} \quad 0 \le Y \le 4.0.$$

8. A method of manufacturing a 3D printed object, comprising:

a melting step of melting the material for 3D printing according to any one of claims 1 to 7; and
a shaping step of extruding the melted material for 3D printing from a nozzle of a 3D printed object manufacturing apparatus to shape a 3D printed object.

9. A 3D printed object, which is a shaped object of the material for 3D printing according to any one of claims 1 to 7.

# FIG.1

FIG.2

10,12

TS10

E12

$Y_A$

BS10

20

Up

Front ◄───► Rear

Down

## INTERNATIONAL SEARCH REPORT

| | International application No. |
|---|---|
| | PCT/JP2020/035806 |

**A. CLASSIFICATION OF SUBJECT MATTER**

Int.Cl. B29K21/00(2006.01)n, B29K23/00(2006.01)n, B29L9/00(2006.01)n, C08L23/10(2006.01)i, C08L101/00(2006.01)i, B33Y10/00(2015.01)i, B33Y80/00(2015.01)i, B29C64/118(2017.01)i, B29C64/209(2017.01)i, B29C64/314(2017.01)i, C08K3/013(2018.01)i, B33Y70/00(2020.01)i

FI: B29C64/314, B33Y70/00, B29C64/209, B33Y10/00, B33Y80/00, B29C64/118, C08K3/013, C08L23/10, C08L101/00, B29K23:00, B29L9:00, B29K21:00

According to International Patent Classification (IPC) or to both national classification and IPC

**B. FIELDS SEARCHED**

Minimum documentation searched (classification system followed by classification symbols)

Int.Cl. B29K21/00, B29K23/00, B29L9/00, C08L23/10, C08L101/00, B33Y10/00, B33Y80/00, B29C64/118, B29C64/209, B29C64/314, C08K3/013, B33Y70/00

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2018-131497 A (TOKYO PRINTING INK MFG CO., LTD.) 23 August 2018 (2018-08-23), claims 1-6, paragraph [0047], examples | 1-9 |
| X | WO 2019/146474 A1 (KONICA MINOLTA, INC.) 01 August 2019 (2019-08-01), claims 1-10, examples | 1-7, 9 |
| A | WO 2017/057424 A1 (KYORAKU CO., LTD.) 06 April 2017 (2017-04-06), claims 1-5, examples | 1-9 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 14 October 2020 | 27 October 2020 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

INTERNATIONAL SEARCH REPORT

Information on patent family members

International application No.

PCT/JP2020/035806

```
JP 2018-131497 A    23 August 2018      (Family: none)

WO 2019/146474 A1   01 August 2019      (Family: none)

WO 2017/057424 A1   06 April 2017       US 2018/0265685 A1
                                        claims 1-16, examples
                                        EP 3351594 A1
                                        CN 108137928 A
```

Form PCT/ISA/210 (patent family annex) (January 2015)

**EP 4 035 881 A1**

**REFERENCES CITED IN THE DESCRIPTION**

**Patent documents cited in the description**

- JP 2017189885 A
- WO 2015129733 A
- JP 2019174751 A
- JP 2020071719 A